(19) Europäisches Patentamt
European Patent Office
Office européen des brevets

(11) **EP 1 515 123 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(51) Int Cl.:
**G01D 5/245** *(2006.01)*

(21) Anmeldenummer: **04017269.4**

(22) Anmeldetag: **22.07.2004**

(54) **Positionsmesseinrichtung**

Position measuring device

Détecteur de position

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.08.2003 DE 10338991**

(43) Veröffentlichungstag der Anmeldung:
**16.03.2005 Patentblatt 2005/11**

(73) Patentinhaber: **Dr. Johannes Heidenhain GmbH 83292 Traunreut (DE)**

(72) Erfinder: **Mayer, Elmar 83365 Nussdorf (DE)**

(56) Entgegenhaltungen:
**DE-A- 4 411 808      DE-A- 10 128 619
DE-A- 19 855 685      DE-C- 19 508 700**

EP 1 515 123 B1

**Beschreibung**

Die Erfindung betrifft eine Positionsmesseinrichtung nach dem Oberbegriff des Anspruchs 1.

Eine derartige Positionsmesseinrichtung umfasst eine entlang einer Messrichtung erstreckte (lineare oder gekrümmte) Messteilung, eine Abtasteinheit zum Abtasten der Messteilung sowie eine Detektionseinrichtung der Abtasteinheit, die eine Vielzahl entlang einer Erstreckungsrichtung periodisch hintereinander angeordnete Detektorelemente umfasst, welche bei Abtastung der Messteilung einer Auswerteeinheit zuführbare Ausgangssignale erzeugt. Hierbei sind jeweils mehrere benachbarte Detektorelemente der Detektionseinrichtung derart zu je einer Detektorgruppe zusammengeschaltet, dass deren Ausgangssignale zusammengeführt werden und der Auswerteeinheit als einheitliches Signal zugeführt werden können.

Durch das Zusammenschalten benachbarter Detektorelemente zu je einer Detektorgruppe soll erreicht werden, dass eine Abtasteinheit mit einer Detektionseinrichtung, die zum Abtasten einer periodischen Messteilung mit einer ersten, feinen Gitterstruktur vorgesehen ist, zugleich auch zum Abtasten einer Messteilung mit einer anderen, gröberen Gitterstruktur verwendet werden kann, vergleiche EP 1 308 700 A2.

Weist beispielsweise die Messteilung mit der gröberen Gitterstruktur die n-fache Gitterkonstante der Messteilung mit der ersten, feineren Gitterstruktur auf, so werden beispielsweise jeweils n-benachbarte Detektorelemente der Detektionseinrichtung zu einer Detektorgruppe zusammengeschaltet, um die Messteilung mit der größeren Gitterkonstante mit derselben Detektionseinrichtung abzutasten.

Bei derartigen Positionsmesseinrichtungen ist die Messteilung typischerweise als eine Strichteilung in Form einer Mehrzahl entlang der Messrichtung (periodisch) hintereinander angeordneter Striche ausgebildet, wobei die Messrichtung sowohl durch eine Gerade (lineares Positionsmesssystem) als auch durch eine gekrümmte, insbesondere kreisbogenförmig erstreckte Linie (im Fall eines sogenannten Drehgebers bzw. Winkelmesssystems) gebildet werden kann. Die Detektorelemente sind beispielsweise als Fotoelemente ausgebildet, die die Messteilung optisch abtasten und die hierbei einer Auswerteeinheit zuführbare elektrische Ausgangssignale erzeugen.

Die einzelnen Detektorelemente der Detektionseinrichtung der Abtasteinheit können hinsichtlich ihrer geometrischen Form in bekannter Weise derart gestaltet werden, dass bei Abtastung der Messteilung mit der ersten, feineren Gitterkonstante eine Oberwellenfilterung erfolgt. D.h., durch die Wahl geeigneter Konturen der Detektorelemente können bei der Abtastung der Messteilung mit der kleineren Gitterkonstante bestimmte, vorgebbare Oberwellen eliminiert werden. Werden jedoch zur Abtastung der gröberen Messteilung mit der größeren Gitterkonstante jeweils mehrere benachbarte Detektorelemente zu einer Detektorgruppe zusammengefasst, so weist das beim Abtasten der gröberen Messteilung erzeugte Ausgangssignal einen signifikanten Oberwellenanteil auf, der sich auf die Weiterverarbeitung und Auswertung des Ausgangssignals störend auswirken kann, vergleiche DE 195 05 176 A1.

Aus der DE 195 08 700 C1 ist eine Vorrichtung zum Gewinnen weitgehend oberwellenfreier periodischer Signale bekannt, die zum Messen von Positionsänderungen zweier relativ zueinander beweglicher Objekte genutzt werden kann. Hierzu wird vorgeschlagen, die Abtastfelder, d.h. die durchlässigen Bereiche einer Abtastteilung, in einer Abtasteinheit unter Berücksichtigung bestimmter Abstandsbedingungen anzuordnen. Insbesondere wird vorgeschlagen, diese Abtastfelder in bestimmten Abständen von ihren eigentlichen Nominallagen anzuordnen, wobei bestimmte Symmetrieüberlegungen berücksichtigt werden.

Die DE 44 11 808 A1 offenbart schließlich verschiedene Möglichkeiten, wie in einer magnetischen Positionsmesseinrichtung die zur Abtastung genutzten magnetoresistiven Elemente ausgestaltet werden können, um störende Oberwellen aus den Abtastsignalen zu entfernen.

Hinweise dahingehend, wie bei optischen Positionsmesseinrichtung der eingangs genannten Art eine Oberwellenfilterung bei verschiedenen Gitterkonstanten gewährleistet werden kann, sind auch den beiden letztgenannten Druckschriften nicht zu entnehmen.

Der Erfindung liegt daher das Problem zugrunde, eine Positionsmesseinrichtung der eingangs genannten Art zu schaffen, die sich durch eine verbesserte Qualität des Ausgangssignals der Detektionseinrichtung auszeichnet.

Dieses Problem wird erfindungsgemäß durch die Schaffung einer Positionsmesseinrichtung mit den Merkmalen des Anspruchs 1 gelöst.

Danach sind die Detektorelemente der Detektionseinrichtung derart zu Detektorgruppen zusammengefasst und diese derart entlang der Erstreckungsrichtung hintereinander angeordnet, dass mindestens eine definierte Oberwelle aus den Ausgangssignalen der Detektionseinrichtung eliminiert wird.

Die erfindungsgemäße Lösung beruht auf der Erkenntnis, dass die Eliminierung von Oberwellen aus den Ausgangssignalen nicht nur durch eine bestimmte Formgebung der Detektorelemente, sondern (unter Ausnutzung bekannter Filterfunktionen) auch durch einen bestimmten Aufbau der einzelnen Detektorgruppen sowie durch deren Anordnung erreicht werden kann. Die Kombination der einzelnen Detektorelemente zu geeigneten Detektorgruppen erfolgt demnach in Abhängigkeit von einer gewählten Filterfunktion, mit der bestimmte, vorgegebene Oberwellen aus den Ausgangssignalen eliminiert werden sollen.

Die Gitterkonstante der abzutastenden (gröberen) Messteilung ist hier vorzusgweise ein ganzzahliges Vielfaches der kleinsten Gitterkonstante der Detektionseinrichtung, also der Periode der Anordnung der einzelnen Detektorelemente ohne Rücksicht auf Phasen und Verschaltungen der Detektorelemente.

Dabei werden jeweils die in Erstreckungsrichtung der Detektionseinrichtung voneinander beabstandeten Detektorgruppen zusammengeschaltet, die Ausgangssignale einer Phase (z. B. jeweils 0°, 90°, 180° oder 270°) erzeugen, so dass deren Ausgangssignale der Auswerteeinheit als einheitliches Signal zugeführt werden. D. h., jeder Detektorgruppe ist ein Ausgangssignal mit einer definierten Phase zugeordnet und die Detektorgruppen, deren Ausgangssignal dieselbe Phase aufweist, werden jeweils so zusammengeschaltet, dass deren Ausgangssignale der Auswerteeinheit als ein gemeinsames Ausgangssignal zugeführt werden.

Für die Eliminierung bestimmter, vorgegebener Oberwellen mittels einer hierfür geeigneten Filterfunktion kann es erforderlich sein, dass die Zahl an Detektorelementen, aus denen die einzelnen Detektorgruppen mit Ausgangssignalen einer Phase bestehen, zumindest für einen Teil der Phasen, variiert. Ferner kann zumindest für einen Teil der Phasen der Abstand zwischen einander benachbarten Detektorelementen gleicher Phase variieren. Die Anordnung der Detektorgruppen entlang der Erstreckungsrichtung kann insbesondere in der Weise erfolgen, dass entlang der Erstreckungsrichtung jeweils aus mehreren Detektorgruppen bestehende Basiseinheiten (vorzugsweise nicht periodisch) hintereinander angeordnet werden. Unter einer Basiseinheit der Detektionseinrichtung wird dabei eine Einheit mit der minimalen Anzahl an Detektorelementen verstanden, die die gewünschte Oberwellenfilterung ermöglicht.
Gemäß einer Ausführungsform der Erfindung sind sämtliche Detektorgruppen der Detektionseinrichtung entlang einer Spur hintereinander angeordnet.

Nach einer anderen Ausführungsform sind die Detektorgruppen entlang mindestens zweier, senkrecht zu der Erstreckungsrichtung der Detektionseinrichtung nebeneinander liegender Spuren angeordnet.

Dabei sind gemäß einer Variante die in unterschiedlichen Spuren angeordneten Detektorgruppen einer Phase um einen bestimmten Versatzabstand Ax zueinander versetzt angeordnet. Für eine definierte Oberwellenfilterung beträgt der Versatzabstand $\Delta x$ in Erstreckungsrichtung der Detektionseinrichtung für entlang der Erstreckungsrichtung benachbarte Detektorgruppen, die in unterschiedlichen Spuren angeordnet sind,

$$\Delta x = m * d * (1 \pm 1/(2 * n)),$$

mit vorzugsweise d = i * $g_f$, wobei d die Gitterkonstante der abzutastenden Messteilung und $g_f$ die kleinste Gitterkonstante der Detektionseinrichtung ist (also deren feinstes, durch die einzelnen Detektorelemente gebildetes periodisches Raster angibt), n die Ordnung der zu filternden Oberwelle angibt und m eine ganze Zahl sowie i eine natürliche Zahl bezeichnet.

Gemäß einer anderen Variante sind alle Detektorgruppen einer Phase jeweils in einer Spur angeordnet, so dass benachbarte Spuren jeweils ausschließlich Detektorgruppen unterschiedlicher Phasen aufweisen. Hierbei kann vorgesehen sein, dass innerhalb einer für die Filterung der jeweiligen Oberwelle erforderlichen Basiseinheit die Detektorgruppen einer ersten und einer zweiten Phase (z. B. 0° und 180°) entlang einer Spur und die Detektorgruppen einer dritten und einer vierten Phase (z. B. 90° und 270°) entlang einer anderen Spur in Erstreckungsrichtung der Detektionseinrichtung hintereinander angeordnet sind.

Es können jedoch auch die Detektorgruppen einer Phase jeweils teilweise in der einen und teilweise in der anderen Spur angeordnet sein. Durch die Verteilung der Detektorgruppen, aus denen Signale einer Phase generiert werden, nicht nur entlang der Mess- bzw. Erstreckungsrichtung der Detektionseinrichtung, sondern auf mindestens zwei benachbarte Spuren, wird die Empfindlichkeit der Anordnung gegenüber Verschmutzung reduziert. Des weiteren wird in diesem Fall das resultierende Abtastsignal nicht durch eventuelle Strichbreitenänderungen der abgetasteten Messteilung beeinflusst.

Die Anordnung der Detektorgruppen entlang der Erstreckungsrichtung der Detektionseinrichtung wird jeweils durch mindestens eine erzeugende Filterfunktion bestimmt, die für jedes Detektorelement angibt, mit welchen benachbarten Detektorelementen es zu einer Detektorgruppe zusammengeschaltet sein soll. In einer bevorzugten Weiterbildung wird die Anordnung der Detektorgruppen entlang der Erstreckungsrichtung dabei durch die Verknüpfung mindestens zweier erzeugender Filterfunktionen bestimmt, die sich auf unterschiedliche Detektorgruppen und/oder auf unterschiedliche Merkmale einer Detektorgruppe beziehen. Hierdurch lässt sich ein besonders hoher Füllfaktor in der aus der Bildung von Detektorgruppen resultierenden Detektoranordnung erreichen, d.h., dass möglichst viele der für die Abtastung eines feineren Maßstabes mit kleiner Gitterkonstante vorgesehenen Detektorelemente für die Bildung der Detektorgruppen herangezogen werden.

Die Anordnung der Detektorgruppen entlang der Erstreckungsrichtung wird dabei vorzugsweise durch die Verknüpfung mindestens zweier komplementärer Filterfunktionen festgelegt, die sich auf unterschiedliche Detektorgruppen und/oder auf unterschiedliche Merkmale einer Detektorgruppe beziehen. Unter komplementären Filterfunktionen werden dabei solche Filterfunktionen verstanden, die sich hinsichtlich der Gesamtfilterwirkung mit Bezug auf bestimmte Vorgaben, wie z. B. die Minimierung des Oberwellengehaltes des Ausgangssignals, ergänzen. Beispiele geeigneter komplementärer Filterfunktionen werden weiter unten bei der Erläuterung spezieller Ausführungsformen der Erfindung angegeben werden.

Zur Eliminierung von Oberwellen aus den Ausgangssignalen kann einerseits der Abstand zwischen jeweils zusammengeschalteten, phasengleichen Detektorgruppen entlang der Erstreckungsrichtung variieren, wobei der durchschnittliche Abstand zwischen den Mittelpunkten (entlang der Erstreckungsrichtung der Detektionseinrichtung betrachtet) der phasengleichen Detektorgruppen vorzugsweise einem konstanten Wert entspricht.

Nach einer Filterfunktion wird der Abstand $\Delta x$ zwischen den Detektorgruppen durch die Vorschrift

$$\Delta x = m * d * (1 \pm 1/(2 * n))$$

mit vorzugsweise $d = i * g_f$ bestimmt, wobei d die Gitterkonstante der abzutastenden Messteilung und $g_f$ die kleinste Gitterkonstante der periodischen Anordnung der Detektorelemente angibt, n die zu filternde Oberwelle und m eine ganze Zahl sowie i eine natürliche Zahl bezeichnet.

Eine andere Filterfunktion ist dadurch charakterisiert, dass die Ausdehnung jeweils zusammengeschalteter, phasengleicher Detektorgruppen entlang der Erstreckungsrichtung der Detektionseinrichtung variiert, indem die einzelnen, phasengleichen Detektorgruppen jeweils durch eine unterschiedliche Anzahl an Detektorelementen gebildet werden. Dabei entspricht die mittlere (durchschnittliche) Ausdehnung der phasengleichen Detektorgruppen vorzugsweise der Periode der Grundwelle der Ausgangssignale der entsprechenden Detektorgruppe.

Gemäß einer konkreten Filterfunktion wird die Ausdehnung $\Delta b$ der Detektorgruppen in Erstreckungsrichtung der Detektionseinrichtung nach der Vorschrift

$$\Delta b = k * d/n$$

mit vorzugsweise $d = i * g_f$ gebildet, wobei i, k natürliche Zahlen bezeichnen sowie d die Gitterkonstante der abzutastenden Messteilung und $g_f$ die kleinste Gitterkonstante der periodischen Anordnung der Detektorelemente ist und n die Ordnung der zu filternden Oberwelle angibt.

Für eine Maximierung des Füllfaktors und eine Minimierung des Fehlers bei der Unterdrückung der Oberwellen kann die Anordnung der Detektorgruppen entlang der Erstreckungsrichtung der Detektionseinrichtung durch die Verknüpfung einer ersten erzeugenden Filterfunktion, gemäß der der Abstand der Detektorgruppen gleicher Phase in Erstreckungsrichtung variiert, mit einer zweiten erzeugenden Filterfunktion, mit der die Ausdehnung der Detektorgruppen entlang der Erstreckungsrichtung definiert wird, bestimmt werden.

Nach einem weiteren Ausführungsbeispiel der Erfindung wird die Anordnung der Detektorgruppen entlang der Erstreckungsrichtung der Detektionseinrichtung durch eine Arcussinus-Funktion bestimmt, wobei die Position x der Detektorgruppen entlang der Erstreckungsrichtung konkret beschrieben wird durch die Funktion

$$x = k * d/(2 * \pi) * \arcsin(k/N)$$

mit vorzugsweise $d = i*g_f$. Hier sind i und N natürliche Zahlen und k ist eine ganze Zahl mit einem Betrag kleiner oder gleich 1. $g_f$ bezeichnet die kleinste Gitterkonstante der periodischen Anordnung der Detektorelemente sowie d die Gitterkonstante der abzutastenden Messteilung. Die Filterfunktion eines derartigen Arcussinus-Filters ist umso umfassender, je größer der Wert für N gewählt wird. Mit einem solchen Filter lassen sich alle Oberwellen erfassen.

Gemäß einer Weiterbildung dieses Ausführungsbeispiels der Erfindung wird die Anordnung der Detektorgruppen in Erstreckungsrichtung der Detektionseinrichtung durch die Verknüpfung zweier Arcussinus-Funktionen bestimmt, wobei die zweite Arcussinus-Funktion vom Typ

$$x = (k + 0.5) * d / (2 * \pi) * \arcsin(k/N)$$

ist.

Dabei gibt die erste bzw. zweite Arcussinus-Funktion die Anordnung derjenigen Detektorgruppen an, deren Ausgangssignale die Phase 0° oder 180° aufweisen. Für die Lage der Detektorgruppen, die Ausgangssignale der Phase 90° oder 270° erzeugen, gelten entsprechende Formeln, wobei am Beginn des entsprechenden Terms jeweils der Ausdruck k + 0.25 bzw. k + 0.75 zu verwenden ist.

Ferner kann vorgesehen sein, dass die eine Arcussinus-Funktion die Anordnung der Detektorgruppen entlang einer ersten Spur und die zweite Arcussinus-Funktion die Anordnung der Detektorgruppen entlang einer zweiten, benachbarten Spur angibt.

Allgemein ist es vorteilhaft, wenn die Ausdehnung der Detektorgruppen entlang der Erstreckungsrichtung und/ oder senkrecht zu der Erstreckungsrichtung der Detektionseinrichtung gemäß einer trigonometrischen oder zyklometrischen (inversen trigonometrischen) Funktion, insbesondere gemäß einer Sinus-, Cosinus- Arcussinus- oder Arcuscosinus-Funktion varriiert. Hiermit lassen sich alle Oberwellen (insbesondere auch für höhere Harmonische) erfassen und filtern.

Eine besonders bevorzugte Ausführungsform der Erfindung sieht vor, dass jeweils senkrecht zu der Erstreckungsrichtung der Detektionseinrichtung nebeneinander angeordnete Detektorelemente derart zu Detektorgruppen zusammengeschaltet sind, dass hierdurch vorgebbare Oberwellen aus den Ausgangssignalen eliminiert werden, wobei die Ausdehnung der Detektorgruppeh senkrecht zu der besagten Erstreckungsrichtung beispielsweise gemäß einer Kosinus-Funktion variieren kann.

Weitere Merkmale und Vorteile der Erfindung werden bei der nachfolgenden Beschreibung von Ausführungsbeispielen anhand der Figuren deutlich werden.

Es zeigen:

Fig. 1 ein erstes Ausführungsbeispiel einer linear erstreckten Detektionseinrichtung zum Abtasten einer Messteilung, die aus einer Vielzahl entlang der Erstreckungsrichtung hintereinander angeordneter Detektorelemente in Form von Fotoelementen besteht, welche jeweils zu Detektorgruppen zusammengeschaltet sind;

Fig. 2 eine Weiterbildung der Anordnung aus Figur 1;

Fig. 3 eine Weiterbildung der Anordnung aus den Figuren 1 und 2, wobei die Detektorelemente und damit die Detektorgruppen auf zwei quer zur Erstreckungsrichtung nebeneinander angeordnete, benachbarte Spuren verteilt sind;

Fig. 4 eine Abwandlung der Anordnung aus Figur 3, wobei die Verteilung der Detektorgruppen in den beiden Spuren durch komplementäre Arcussinus-Funktionen bestimmt ist;

Fig. 5a eine Abwandlung der Anordnung aus den Figuren 3 und 4, wobei die Ausdehnung der Detektorgruppen quer zur Erstreckungsrichtung der Spuren variiert;

Fig. 5b eine Detaildarstellung einer der Figur 5a ähnlichen Anordnung;

Fig. 6 eine schematische Darstellung des Versatzes von Detektorgruppen ein und derselben Phase, die in benachbarten Spuren angeordnet sind;

Fig. 7 eine schematische Darstellung einer Messteilung eines Drehgebers mit einer definierten Gitterkonstante, die durch eine Abtasteinheit mit einer Detektionseinrichtung abgetastet wird.

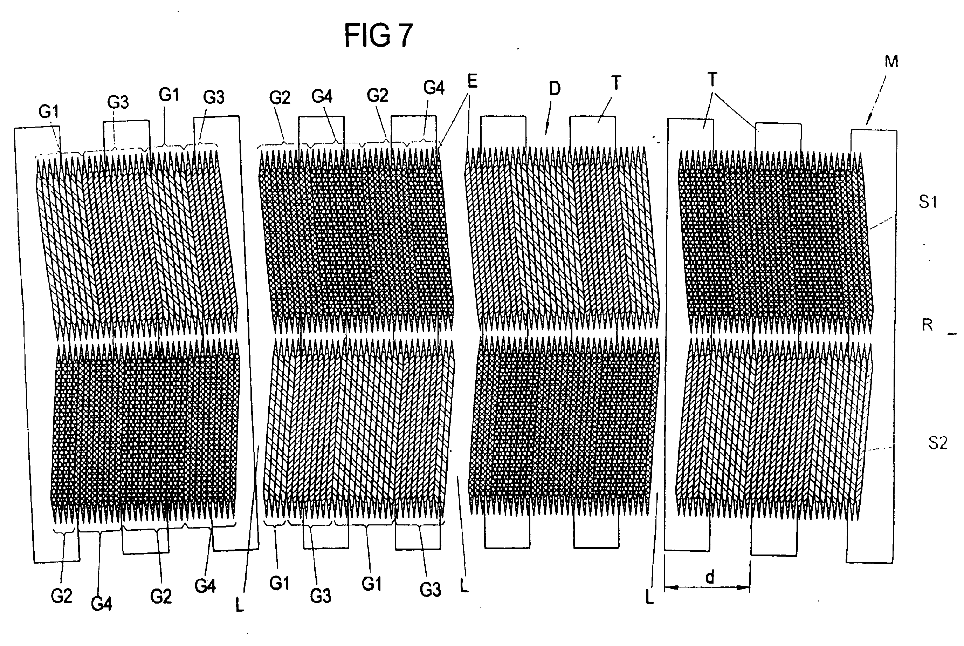

In Figur 7 ist schematisch ein Ausschnitt einer Messteilung M eines Drehgebers (Winkelmesssystems) dargestellt, die aus einer Vielzahl entlang der (durch einen Kreisbogen definierten) Erstreckungsrichtung R der Messteilung M periodisch hintereinander angeordneten Teilungsstriche T mit einer Gitterkonstante d besteht.

Zur Abtastung der Messteilung M mit der Gitterkonstanten d wird eine Detektionseinrichtung D einer Abtasteinheit verwendet, die aus einer Vielzahl Detektorelementen E in Form von Fotoelementen besteht, die in zwei nebeneinander angeordneten Spuren S1, S2 jeweils entlang der Erstreckungsrichtung R der Messteilung M hintereinander angeordnet sind.

Die einzelnen Detektorelemente E in Form von Fotoelementen sind dabei in ihrer Größe, in ihrer Anordnung hintereinander sowie in ihrer Geometrie derart gewählt, dass sie bei der Abtastung einer Messteilung eines Drehgebers mit einer um das Vierfache kleineren Gitterkonstanten als der in Figur 7 dargestellten Messteilung M Ausgangssignale erzeugen, die aufgrund der Geometrie der einzelnen Detektorelemente E frei von bestimmten, vorgegebenen Oberwellen sind. Dabei erzeugt jedes einzelne Detektorelement E ein Ausgangssignal mit einer bestimmten Phase und entlang der Erstreckungsrichtung R voneinander beabstandete Detektorelemente E, die Ausgangssignale derselben Phase erzeugen, führen ihr jeweiliges Ausgangssignal als einheitliches Signal einer Auswerteeinheit zu, wo die Ausgangssignale unterschiedlicher Phasen ausgewertet und hierdurch die relative Lage der Detektionseinrichtung D bezüglich der Messteilung M entlang der Erstreckungs- bzw. Messrichtung R bestimmt werden kann. Wenn die Messteilung M einerseits und die Detektionseinrichtung D andererseits zwei unterschiedlichen Maschinenteilen einer Werkzeugmaschine zugeordnet und mit diesen jeweils verbunden sind, so lässt sich hierdurch eine Relativbewegung der beiden Maschinenteile zueinander erfassen.

Zur Abtastung der in Figur 7 dargestellten Messteilung M, deren Gitterkonstante d größer ist als die Gitterkonstante derjenigen Messteilung, für deren Abtastung die einzelnen Detektorelemente E als solche ursprünglich ausgebildet und angeordnet sind, werden die Detektorelemente E zu Detektorgruppen G1, G2, G3, G4 zusammengefasst, die sich auf beide Spuren S1, S2 verteilen und dort jeweils mehrfach auftreten. Dabei gibt es vier unterschiedliche Typen von Detektorgruppen G1, G2, G3, G4, wobei jeder Typ G1 bzw. G2 bzw. G3 bzw. G4 jeweils Ausgangssignale einer bestimmten Phase (0° bzw. 90° bzw. 180° bzw. 270°) erzeugt.

Die Zusammenschaltung der Detektorelemente E zu Detektorgruppen G1, G2, G3, G4 erfolgt dabei in der Weise, dass die Ausgangssignale der Detektorelemente (elektrische Ausgangssignale bei Detektorelementen in Form von Fotoelementen, die die Messteilung M optisch abtasten) einer Detektorgruppe G1, G2, G3 oder G4 jeweils gemeinsam der zugeordneten Auswerteeinheit zugeführt werden. Die Detektorelemente E einer Detektorgruppe G1, G2, G3 oder G4 sind also jeweils elektrisch zusammengeschaltet. Ferner werden wiederum diejenigen (entlang der Erstreckungsrichtung R voneinander beabstandeten) Detektorgruppen zusammengeschaltet, die ein Ausgangssignal ein und derselben Phase erzeugen, so dass die Ausgangssignale einer Phase der Auswerteeinheit gemeinsam zugeführt werden. Es werden also alle diejenigen Detektorgruppen G1 elektrisch zusammengeschaltet, die Ausgangssignale einer Phase von 0° erzeugen; alle diejenigen Detektorgruppen G2, die Ausgangssignale einer Phase von 90° erzeugen; alle diejenigen Detektorgruppen G3, die Ausgangssignale einer Phase von 180° erzeugen; sowie alle diejenigen Detektorgruppen G4, die Ausgangssignale einer Phase von 270° erzeugen.

Die Detektorelemente einer Detektorgruppe sind dabei in Figur 7 jeweils dadurch erkennbar, dass sie die gleiche Schraffur aufweisen. Das Gleiche gilt für solche entlang der Erstreckungsrichtung R voneinander beabstandeten Detektorgruppen, die Ausgangssignale mit einer übereinstimmenden Phase erzeugen.

Die in Figur 7 erkennbaren Lücken L zwischen benachbarten Detektorgruppen umfassen jeweils solche Detektorelemente, die bei der Bildung von Detektorgruppen nicht verwendet wurden. Alternativ können an den Lücken L aus technischen Gründen von vornherein keine Sensoren vorgesehen sein.

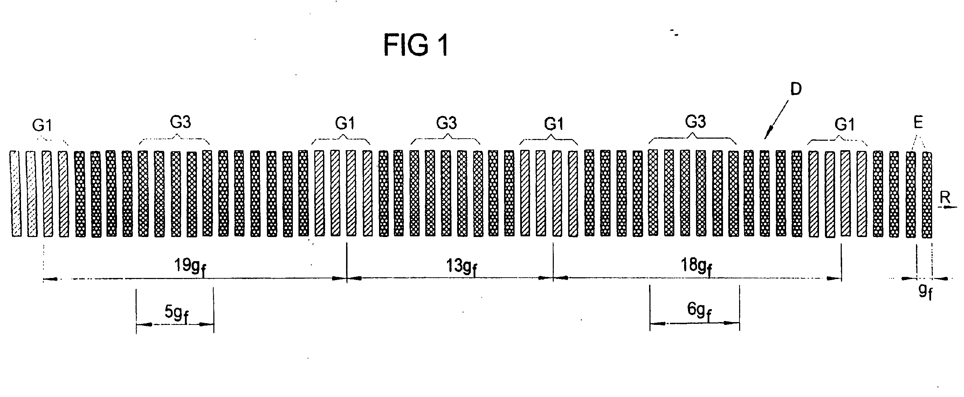

Im Folgenden werden nun anhand der Figuren 1 bis 6 Vorschriften angegeben und analysiert werden, nach denen die einzelnen Detektorelemente zu Detektorgruppen zusammengeschaltet werden können, um einerseits einen möglichst großen Füllfaktor zu erhalten, d. h. möglichst viele Detektorelemente bei der Bildung der Detektorgruppen zu verwenden, und andererseits mittels der durch die Detektorgruppen gebildeten Detektoreinrichtung definierte Oberwellen aus den Ausgangssignalen herausfiltern zu können.

Ausgangspunkt für die in den Figuren 1 bis 3 dargestellten Ausführungsbeispiele ist dabei jeweils folgende Überlegung:

Zur Eliminierung von Oberwellen in den Ausgangssignalen der Detektorgruppen eignet sich zum einen ein Distanzfilter in Form eines sogenannten Zwei-Strichfilters mit der Erzeugungsregel

$$\Delta x = m \cdot d \cdot (1 \pm 1/(2 \cdot n)),$$

wobei $\Delta x$ den Abstand zwischen benachbarten Detektorgruppen bezeichnet, d die Gitterkonstante der abzutastenden Messteilung und n die Ordnung der zu filternden Harmonischen angibt, z. B. n = 3 oder n = 5. m ist eine ganze Zahl. Die minimale Ausdehnung eines derartigen Filters erstreckt sich über zwei Perioden des zu filternden Ausgangssignals.

Eine weitere Möglichkeit zur Eliminierung von Oberwellen besteht in der Verwendung eines Breitenfilters in Form eines Einzelspaltfilters mit der Erzeugungsregel

$$\Delta b = k \cdot d/n,$$

wobei $\Delta b$ die Breite der jeweiligen Detektorgruppe angibt, d die Gitterkonstante der abzutastenden Messteilung und n die zu filternde Harmonische bezeichnet. k ist ein Element der natürlichen Zahlen.

Ausgehend von dem feinsten Raster $g_f$ (entsprechend der kleinsten Gitterkonstante der einzelnen Detektorelemente) der entlang der Mess- bzw. Erstreckungsrichtung R erstreckten Detektionseinrichtung D ergeben sich hiervon ausgehend folgende Regeln für die Zusammenfassung der Detektorelemente E zu Detektorgruppen sowie für deren Verteilung entlang der Erstreckungsrichtung R zur Abtastung einer Messteilung mit einer Gitterkonstanten, die größer ist als diejenige Gitterkonstante, auf die das feinste Raster $g_f$ abgestimmt ist.

Sei $d = i \cdot g_f$, d. h., die Gitterkonstante d der abzutastenden Messteilung M ist ein ganzzahliges Vielfaches des feinsten Rasters $g_f$ der Detektionseinrichtung D, wie im Folgenden zugrundegelegt wird; dann gilt

$$\Delta x = d * (1 + 1/(2*n)) = i * g_f * (1 + 1/(2*n)).$$

Im Allgemeinen ist $\Delta x$ mod $g_f \neq 0$, d. h. der nach der obigen Erzeugungsregel gebildete Abstand $\Delta x$ zwischen zwei Detektorgruppen gleicher Phase ist kein ganzzahliges Vielfaches des zugrunde liegenden feinsten Rasters $g_f$ der einzelnen Detektorelemente E. Dies bedeutet, dass der nach der Erzeugungsregel für den Distanzfilter berechnete Abstand $\Delta x$ zwischen zwei Detektorgruppen gleicher Phase nicht durch ein ganzzahliges Vielfaches des zugrunde liegenden feinsten Rasters $g_f$ dargestellt werden kann. Wählt man das zu dem tatsächlichen Wert nächstliegende ganzzahlige Vielfache, so ergeben sich Abweichungen $f_1$, $f_2$ von der nach der Erzeugungsregel berechneten optimalen Distanz $\Delta x$ (Fehler), die allgemein wie folgt dargestellt werden können:

$$f_1 = 1 - {}^{p}/_{2n}$$

und/oder

$$f_2 = {}^{p}/_{2n},$$

mit $p \in IR$,
je nach dem, ob der tatsächliche, einem ganzzahligen Vielfachen des Rasters $g_f$ entsprechende Abstand zwischen den Detektorgruppen gleicher Phase kleiner oder größer als der ideale Wert $\Delta x$ gewählt wird.

Für eine verbesserte (optimierte) Filterung kann jedoch die Tatsache genutzt werden, dass sich die vorstehend angegebenen Abweichungen $f_1$ und $f_2$ gegenseitig kompensieren können, d. h. für den Gesamtfehler gilt

$$\Sigma f = l_1 * f_1 - l_2 * f_2, \text{ mit } l_1, l_2 \; \varepsilon \; NI.$$

Daraus folgt für die Minimierung des Oberwellengehaltes, dass

$$2n / k - 1 = l_2 / l_1; \text{ mit } l_1, l_2 \; \varepsilon \; NI,$$

wobei die Summe $l_1 + l_2$ zugleich auch ein Maß für die Anzahl der abzutastenden Perioden der Gitterkonstante d ist. Dies sei im Folgenden an einem Beispiel näher erläutert.

Die Gitterkonstante $d_f$ der mit der Detektionseinrichtung ursprünglich abzutastenden Messteilung (feinste Gitterkonstante) betrage $d_f$ gleich 1/2048. Mit vier Detektionselementen (Fotodektoren) pro Periode ergibt sich $g_f = \frac{1}{4} * d_f$.

Die größere Gitterkonstante der mit derselben Detektionseinrichtung abzutastenden gröberen Messteilung betrage d = 1/512. D. h., es soll mit einer Detektionseinrichtung eines vorgegebenen Rasters $g_f$, die ursprünglich für die Abtastung einer Messteilung mit der Gitterkonstante $d_f$ = 1/2048 ausgelegt ist, zusätzlich auch eine Messteilung mit der vierfachen Gitterkonstante d = 1/512 abgetastet werden. Gemäß den obigen Ausführungen zur Erzeugungsregel für einen Distanzfilter folgt für die Filterung der dritten Harmonischen (d. h., n = 3)

$$\Delta x = d * (1 \pm \frac{1}{2} * 3) = 4 * d_f * (1 \pm \frac{1}{2} * 3) = 16 * g_f * (1 \pm 1/6) = 16 * (g_f \pm 1/6 * g_f).$$

Aus den vorstehend erläuterten Formeln für die Minimierung des Gesamtfehlers zur Minimierung des Oberwellengehaltes ergibt sich für den Minus-Zweig der Gleichung ferner $l_2/l_1$ = 6/4 - 1 = $\frac{1}{2}$ und $l_1 + l_2$ = 3, mit $l_1$ = 2 und $l_2$ = 1. D. h., um im Mittel (Durchschnitt) hinsichtlich des Abstandes zwischen Detektorgruppen gleicher Phase den idealen,

angestrebten Wert $\Delta x$ zu erhalten, wird für die tatsächlichen Abstände je zweimal ein um $1/3 * g_f$ zu kurzer Abstand und einmal ein um $2/3 * g_f$ zu langer Abstand zwischen den Detektorgruppen gleicher Phase gewählt, womit zugleich die minimale Länge des Filters auf sechs Perioden festgelegt ist. Somit tritt der um $1/3 * g_f$ zu kurze Abstand doppelt so häufig auf, wie der um $2/3 * g_f$ zu lange Abstand zwischen unmittelbar aufeinander folgenden Detektorgruppen gleicher Phase.

Ausgedrückt in Einheiten des feinsten Rasters $g_f$ der Detektionseinrichtung ergeben sich somit folgende Mittenabstände für die hinsichtlich ihres Abstandes zu variierenden Detektorgruppen gleicher Phase: Ausgehend von der obigen Gleichung für die Filterung der dritten Harmonischen einer Phase erhält man ideale Abstände $\Delta x$ von $18.66 * g_f$ und $13.33 * g_f$, je nach dem, ob der "Plus"- oder der "Minus"-Zweig der Gleichung für $\Delta x$ gewählt wird. Für die reale Detektoranordnung ergeben sich somit reale Abstände von einerseits $19 * g_f$ und $18 * g_f$, wobei der erstgenannte, größere Abstand doppelt so häufig auftritt wie der zweitgenannte kleinere und andererseits reale Abstände von $13 * g_f$ und $14 * g_f$, wobei der erstgenannte, kleinere Abstand doppelt so häufig auftritt wie der zweitgenannte, größere Abstand.

Die vorstehend im Detail erläuterten Berechnungen zur Distanzfilterung (Zwei-Strichfilterung) lassen sich analog auf die Behandlung der Breitenfilter (Einzelspaltfilter) übertragen, wobei statt des Abstandes zwischen aufeinander folgenden Detektorgruppen gleicher Phase die Breite der Detektorgruppen gleicher Phase entlang der Erstreckungsrichtung R variiert.

Hierbei gilt unter Zugrundelegung der obigen Gleichung für die Breite $\Delta b$ der Detektorgruppen gleicher Phase im Fall der Filterung der dritten Harmonischen

$$\Delta b = k * d/3 = k * 16 * g_f * 1/3 = k * 5,33\ g_f.$$

Ausgehend von der idealen Breite $\Delta b$ der Detektorgruppen mit dem Wert $\Delta b = 5.33 * g_f$ treten in der realen Anordnung doppelt so häufig Detektorgruppen einer bestimmten Phase mit der Breite $\Delta b = 5 * g_f$ auf wie entsprechende Detektorgruppen mit der Breite $\Delta b = 6 * g_f$.

Figur 1 zeigt eine Kombination der beiden vorbeschriebenen Filtermethoden (Distanzfilter und Breitenfilter) zur Filterung der dritten Harmonischen (d.h., n = 3), mit der eine Filterung für das Cosinus-Signal realisiert werden kann, d.h., die Detektorgruppen G1, deren Ausgangssignale die Phase 0° aufweisen, sowie die Detektorgruppen G3, deren Ausgangssignale die Phase 180° aufweisen, werden nach den obigen Vorschriften verschaltet, wobei die erstgenannten Detektorgruppen G1 bei konstanter Breite dem Distanzfilter (bezogen auf den Abstand zwischen den - in Erstreckungsrichtung R betrachtet - Mittelpunkten der jeweils unmittelbar aufeinanderfolgenden Detektorgruppen G1) unterworfen sind und die zweitgenannten Detektorgruppen G3 zur Erzielung der mittleren Breite $\Delta b = 5,33 * g_f$ unterschiedliche Breiten von $5 * g_f$ und $6 * g_f$ aufweisen.

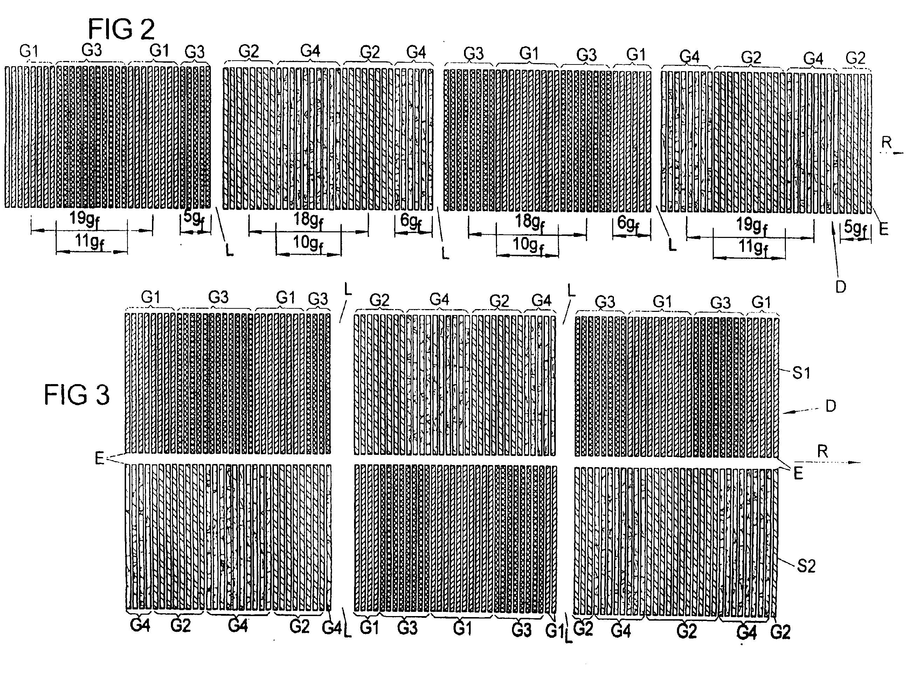

Bei der in Figur 1 gezeigten Anordnung ist neben der vorbeschriebenen Filterung des Cosinus-Signales nur eine eingeschränkte Filterung des Sinus-Signales mit den Phasen 90° und 270° möglich. Um das Cosinus-Signal und das Sinus-Signal in gleicher Weise einer Filterung unterziehen zu können, ist eine in Figur 2 dargestellte Weiterentwicklung der Anordnung aus Figur 1 vorgesehen.

Gemäß Figur 2 werden aus jeweils zwei Gitterperioden (d), d. h. aus 32 Detektorelementen E bestehende Detektorblöcke abwechselnd für die Filterung des Cosinus-Signales und für die Filterung des Sinus-Signales genutzt. Die zur Filterung des Cosinus-Signales verwendeten Blöcke enthalten dabei jeweils diejenigen Detektorgruppen G1, G3, die Ausgangssignale mit einer Phase von 0° bzw. 180° erzeugen. Die zur Filterung des Sinus-Signales verwendeten Detektorblöcke umfassen Detektorgruppen G2, G4, die jeweils Ausgangssignale mit einer Phase von 90° bzw. 270° erzeugen.

Dabei ist zu berücksichtigen, dass in den zur Filterung des Cosinus-Signales bzw. in den zur Filterung des Sinus-Signales dienenden Detektorblöcken jeweils abwechselnd die einen Detektorgruppen G1 oder G3 bzw. G2 oder G4 einem Distanzfilter und einem Breitenfilter unterzogen werden. So beträgt in Figur 2 in dem ersten Detektorblock die Breite der Detektorgruppen G1, die Ausgangssignale mit einer Phase von 0° erzeugen, jeweils acht Detektorelemente. Die Breite der beiden Detektorgruppen G3, die jeweils Ausgangssignale mit einer Phase von 180° erzeugen, beträgt demgegenüber einmal elf Detektorelemente und einmal fünf Detektorelemente. In diesem ersten Detektorblock sind also diejenigen Detektorgruppen G1, die Ausgangssignale mit einer Phase von 0° erzeugen, bei konstanter Breite einem Distanzfilter unterzogen und diejenigen Detektorgruppen G3, die Ausgangssignale mit einer Phase von 180° erzeugen, einem Breitenfilter unterzogen. In dem dritten Detektorblock, der wiederum Detektorgruppen G1, G3 umfasst, welche Ausgangssignale mit einer Phase von 0° bzw. 180° erzeugen, ist die Situation genau umgekehrt. Diejenigen Detektorgruppen G3, welche ein Ausgangssignal mit einer Phase von 180° erzeugen, weisen dort eine konstante Breite von acht Detektorelementen auf, während die anderen Detektorgruppen G1 eine Breite von zehn bzw. sechs Detektorelementen aufweisen.

Die gleiche Situation besteht in dem zweiten und vierten Detektorblock, die jeweils Detektorgruppen G2, G4 beinhalten, welche Ausgangssignale mit einer Phase von 90° bzw. 270° erzeugen. In dem zweiten Detektorblock weisen die Detektorgruppen G2, die Ausgangssignale mit einer Phase von 90° erzeugen, jeweils eine konstante Breite von acht Detektorelementen auf, während die beiden anderen Detektorgruppen G4 in einem Fall eine Breite von zehn Detektorelementen und im anderen Fall eine Breite von sechs Detektorelementen aufweisen. Im vierten Detektorblock ist die Situation wiederum umgekehrt: Hier weisen die Detektorgruppen G4, die Ausgangssignale mit einer Phase von 270° erzeugen eine konstante Breite von acht Detektorelementen auf, und die anderen Detektorgruppen G2 weisen in einem Fall eine Breite von elf Detektorelementen und im anderen Fall eine Breite von fünf Detektorelementen auf.

Sowohl bei den Detektorblöcken, die der Filterung des Cosinus-Signales dienen, als auch bei den Detektorblöcken, die der Filterung des Sinus-Signales dienen, variiert die Distanz zwischen den Detektorgruppen, die einem Distanzfilter unterzogen sind. In den in Figur 2 dargestellten Detektorblöcken beträgt sie teilweise achtzehn und teilweise neunzehn Detektorelemente. Ebenso gibt es eine Variation in dem Breitenfilter, der in einem Teil der Detektorblöcke durch die Kombination von Detektorgruppen der Breite elf Detektorelemente mit Detektorgruppen der Breite fünf Detektorelemente gebildet wird, und in anderen Detektorblöcken durch Kombination von Detektorblöcken der Breite zehn Detektorelemente mit Detektorgruppen der Breite sechs Detektorelemente. Dies geschieht aus den oben angegebenen Gründen der Minimierung des Gesamtfehlers der Anordnung zur Optimierung der Filterwirkung.

Die Anordnung in Figur 2 zeichnet sich insgesamt durch eine verbesserte Symmetrie sowohl hinsichtlich der Filterung des Cosinus-Signales einerseits und der Filterung des Sinus-Signales andererseits aus, als auch hinsichtlich des Einsatzes des Breitenfilters einerseits und des Distanzfilters andererseits in den einzelnen Detektorblöcken. Dies verbessert insbesondere die Unempfindlichkeit der Anordnung gegenüber Verschmutzung.

Die in Figur 2 dargestellte Ausbildung und Anordnung der Detektorgruppen G1, G2, G3 und G4 ermöglicht zwar eine gleichartige Filterung sowohl des Sinus- als auch des Cosinus-Signales; jedoch weist diese Anordnung den Nachteil des Verlustes des Einfeldcharakters der Abtastung auf, d. h. der Gewinnung aller vier Phasen aus einer Signalperiode.

Zur Kompensation dieses Nachteiles ist gemäß Figur 3 eine Verdopplung der Abtastspur vorgesehen, so dass die Detektionseinrichtung D zwei senkrecht zu ihrer Erstreckungsrichtung R (Messrichtung) nebeneinander angeordnete Spuren S1, S2 umfasst, wobei in jeder der beiden Spuren jeweils abwechselnd Detektorblöcke mit Detektorgruppen G1, G3 zur Filterung des Cosinus-Signales und Detektorblöcke mit Detektorgruppen G2, G4 zur Filterung des Sinus-Signales angeordnet sind. Quer zur Erstreckungsrichtung R nebeneinander angeordnete Detektorblöcke dienen dabei jeweils zur Filterung unterschiedlicher Signale, d. h., neben einem der Filterung des Cosinus-Signales angeordneten Filterblock in der Spur S1 (bestehend aus Detektorgruppen G1, G3 mit Ausgangssignalen der Phase 0° und 180°) ist in der anderen Spur S2 jeweils ein Detektorblock zur Filterung des Sinus-Signales (also bestehend aus den Detektorgruppen G2 und G4, welche Ausgangssignale der Phase 90° und 270° erzeugen) angeordnet, und umgekehrt.

In diesem Fall weist also eine Basiseinheit, die der Filterung sowohl des Cosinus- als auch des Sinus-Signales dient und hierzu sowohl Breiten- als auch Distanzfilter umfasst, entlang der Erstreckungsrichtung R lediglich eine Ausdehnung von 32 Detektorelementen (entsprechend zwei Gitterkonstanten d der abzutastenden Messteilung) auf. Ein weiterer Vorteil der in Figur 3 dargestellten Anordnung mit zwei nebeneinander, parallel zueinander entlang der Erstreckungsrichtung R verlaufenden Spuren S1, S2 liegt somit in der Reduzierung der Abtastlänge.

In den Figuren 2 und 3 entsprechen die Lücken L zwischen benachbarten Detektorelementen E jeweils bei der Bildung der Detektorgruppen G1, G2, G3 und G4 nicht genutzten Detektorelementen der Detektionseinrichtung. Die entsprechenden, nicht genutzten Detektorelemente stehen nicht mit der Auswerteeinheit in Verbindung, sind also insbesondere nicht mit den weiteren Detektorelementen zur Bildung von Detektorgruppen verschaltet. Es kann sich hierbei aber auch um Lücken L handeln, die aus technischen Gründen ohnehin keine Detektorelemente enthalten.

Entsprechend dem vorstehend speziell für die Filterung der dritten Harmonischen beschriebenen Vorgehen können durch geeignetes Zusammenfassen der einzelnen Detektorelemente E einer Detektionseinrichtung D sowie durch geeignete Anordnung der hierdurch gebildeten Detektorgruppen G1, G2, G3, G4 hintereinander auch andere Oberwellen sowie mehrere Oberwellen gleichzeitig aus den Ausgangssignalen der Detektionseinrichtung eliminiert werden, und zwar auf der Grundlage der weiter oben beschriebenen Filterfunktionen auf der Basis eines Distanz- sowie eines Breitenfilters.

Für eine möglichst kompakte Ausgestaltung der zur Filterung verwendeten Anordnung kann bereits die ursprüngliche, feinste Struktur mit dem kleinsten Raster $g_f$ in mehreren Spuren ausgeführt sein, um für die Filterung der gröberen Spur mit einem größeren Raster einen zusätzlichen Freiheitsgrad für die optimale Verteilung der Detektorgruppen zu erreichen, vergleiche hierzu die DE 100 20 575 A1.

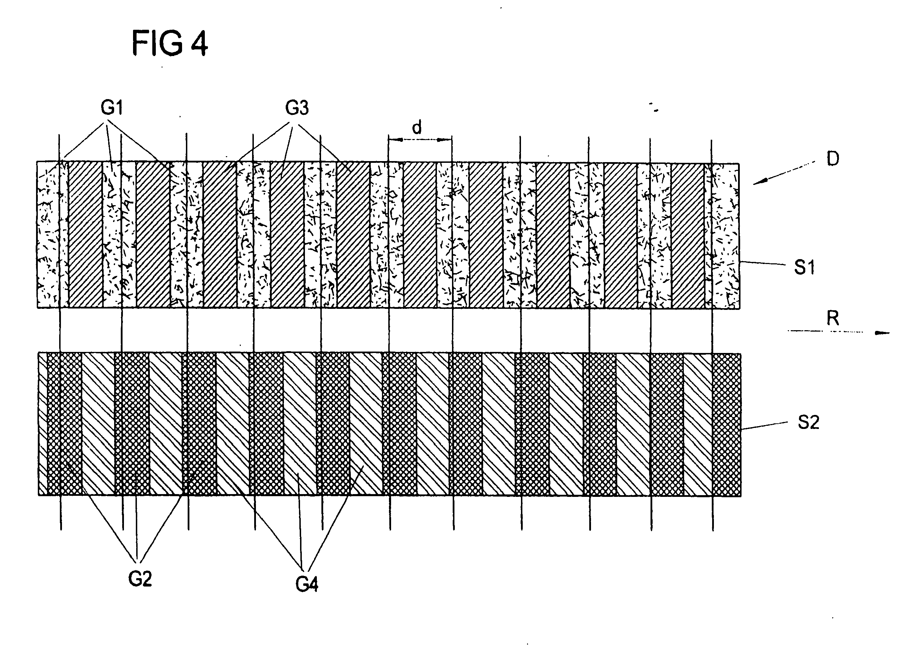

Figur 4 zeigt eine Detektionseinrichtung D, die zwei quer zur Erstreckungsrichtung R (Messrichtung) nebeneinander angeordnete Spuren S1, S2 aufweist. Jede der beiden Spuren S1, S2 erstreckt sich jeweils entlang der Messrichtung R. Die erste Spur S1 wird dabei gebildet durch Detektorgruppen G1, G3, die Ausgangssignale mit einer Phase von 0° bzw. 180° erzeugen, und die zweite Spur S2 wird gebildet durch Detektorgruppen G2, G4, die Ausgangssignale mit einer Phase von 90° bzw. 270° erzeugen.

Es handelt sich hierbei um ein zweites Beispiel für die Verwendung komplementärer Filterstrukturen zur Oberflächenfilterung. Während bei den anhand der Figuren 1 bis 3 dargestellten Ausführungsbeispielen als komplementäre Filter ein Distanz- und ein Breitenfilter verwendet wurden, dienen bei dem in Figur 4 dargestellten Ausführungsbeispiel zwei komplementäre Arcussinus-Filter als Erzeugende für Lage der Detektorgruppen. Die ideale Position für die Lage der Detektorgruppen G1, G3 der Ausgangssignale mit einer Phase von 0° bzw. 180° wird dabei beschrieben durch die Erzeugende.

$$X_{0k} = \frac{k * d}{2 * \pi} \arcsin\left(\frac{k}{N}\right),$$

wobei k = -N ... N und N = 3,5,7 ...

Die hierzu komplementäre (ergänzende) Erzeugende einer Filterfunktion lautet:

$$x_{180k} = \frac{(k + 0.5) * d}{2 * \pi} \arcsin\left(\frac{k}{N}\right),$$

In Figur 4 ist dabei die ideale Anordnung der Detektorgruppen G1, G2, G3, G4 dargestellt. Entsprechend den vorstehend anhand der Figuren 1 bis 3 beschriebenen Ausführungsbeispielen besteht auch hier das Problem, dass die aus realen Detektorelementen (in Figur 4 der Übersichtlichkeit halber nicht mit dargestellt) gebildeten Detektorgruppen nicht genau die durch die erzeugenden Filterfunktionen angegebene Lage und Ausdehnung aufweisen. Dementsprechend muss auch hier durch geeignete Anordnung von Detektorgruppen, die jeweils Abweichungen von der idealen Detektorgruppe aufweisen, eine Minimierung, möglichst Eliminierung, des Gesamtfehlers erfolgen. Dies geschieht auf der Grundlage der gleichen Prinzipien, die weiter oben für die Fehler $f_1$ und $f_2$ bei der Filterung der Oberwellen durch einen Distanz- und einen Breitenfilter erläutert.

Nach einer anderen Ausführungsform der Erfindung sind die einzelnen Detektorgruppen durch eine charakteristische Variation ihrer Ausdehnung quer zur Erstreckungsrichtung R charakterisiert.

Ausgehend von einer Detektionseinrichtung, bei der eine Mehrzahl von Fotoelementen quer zur Erstreckungsrichtung R (Messrichtung) nebeneinander angeordnet ist, kann eine Filterfunktion der für die Abtastung der gröberen Messteilung ausgestalteten Detektionseinrichtung auch durch geeignete Verschaltung der einzelnen Detektorelemente entlang einer Richtung Q quer zur Erstreckungs- bzw. Messrichtung der Detektionseinrichtung D erreicht werden. D.h., bezogen auf die zugrunde liegende Messteilung M (vergleiche Figur 7) erfolgt eine Verschaltung von Detektorelementen in Strichrichtung der Teilungsstriche T der Messteilung M. Dies ist natürlich, wie bereits erwähnt, nur dann möglich, wenn entlang der Querrichtung Q (senkrecht zur Erstreckungsrichtung R) eine hinreichende Zahl von Detektorelementen nebeneinander angeordnet ist.

Alternativ kann vorgesehen sein, dass die entsprechenden Spuren von vornherein Detektorelemente aufweisen, deren Ausdehnung entlang der Querrichtung Q variiert, wobei dann nur noch entlang der Erstreckungsrichtung R nebeneinander angeordnete Detektorelemente unterschiedlicher Ausdehnung in Querrichtung Q miteinander verschaltet werden müssen, um die gewünschten Detektorgruppen zu bilden.

Unabhängig davon, ob die einzelnen, in Erstreckungsrichtung R nebeneinander angeordneten Detektorbereiche, die jeweils unterschiedliche Ausdehnung entlang der Querrichtung Q aufweisen, durch Detektorelemente gebildet werden, die von vornherein eine unterschiedliche Ausdehnung entlang der Querrichtung Q aufweisen, oder durch das Verschalten kleinerer Detektorelemente entlang der Querrichtung Q, müssen diese Detektorbereiche zur Bildung von Detektorgruppen jeweils noch in Erstreckungsrichtung R verschaltet werden.

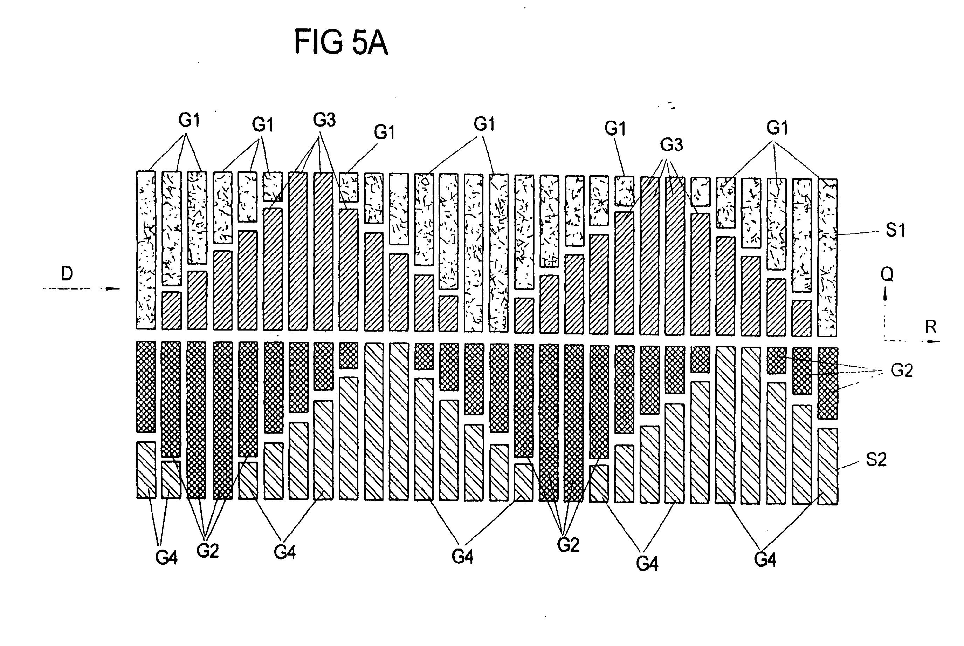

Figur 5a zeigt eine derartige Anordnung mit zwei nebeneinander angeordneten Spuren S1, S2, wobei die eine Spur S1 Detektorgruppen G1, G3 aufweist, welche Ausgangssignale mit einer Phase von 0° bzw. 180° erzeugen, und die andere, benachbarte Spur S2 Detektorgruppen G2, G4 enthält, welche Ausgangssignale mit einer Phase von 90° bzw. 270° erzeugen.

Die Filterfunktionen der in Figur 5a dargestellten Anordnung, durch die die Verschaltung der Detektorelemente quer zur Erstreckungsrichtung R bestimmt wird, lauten:

$$y_{0k} = h * \left|\cos(\pi * k / N)\right|,$$

und

$$y_{180k} = h * \left(1 - \left|\cos(\pi * k / N)\right|\right),$$

Hier gibt h die Höhe der jeweiligen Spur S1, S2 (Ausdehnung quer zur Erstreckungsrichtung R) an; N bezeichnet die Anzahl der Detektoren pro Teilungsperiode d der abzutastenden Messteilung und k = - N ... N (d.h. k nimmt einen ganzzahligen Wert zwischen -N und N an). Es handelt sich also hier um komplementäre Filterfunktionen auf der Basis jeweils einer Cosinus-Funktion.

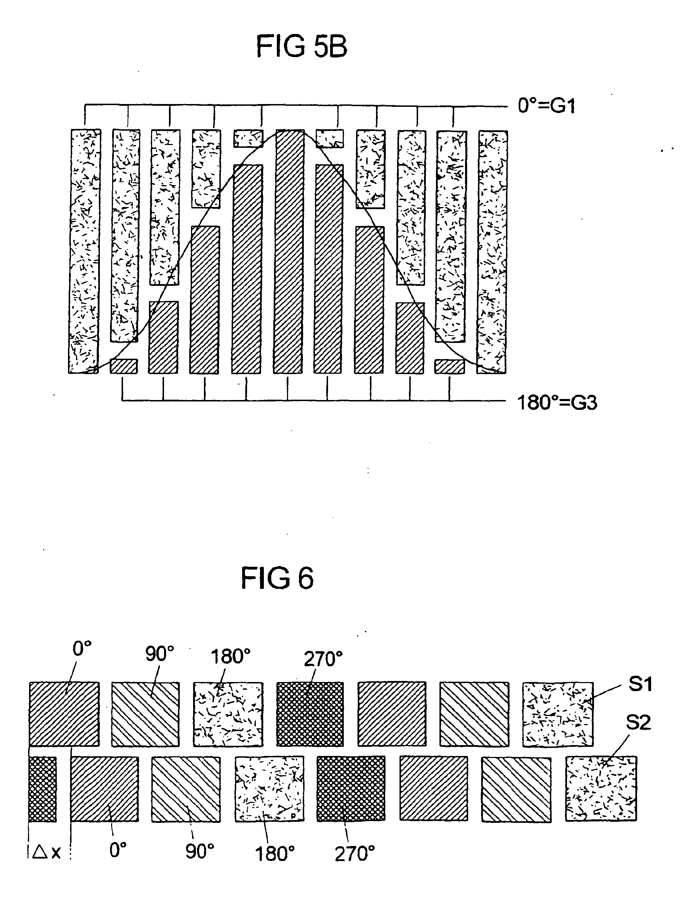

Figur 5b zeigt beispielhaft wie eine durch eine durchgezogene Linie repräsentierte ideale Filterfunktion auf der Grundlage einer Sinus- oder Cosinus-Funktion näherungsweise durch Verschaltung von Detektorelementen quer zur Erstreckungsrichtung der Detektionseinrichtung nachvollzogen werden kann, und zwar beispielhaft für Detektorgruppen G1, G3 der Phase 0° bzw. 180°.

In den Figuren 5a und 5b können die einzelnen Detektorbereiche, deren Ausdehnung entlang einer Querrichtung Q senkrecht zur Erstreckungsrichtung R variiert, einerseits durch geeignetes Verschalten jeweils entlang der Querrichtung Q nebeneinander angeordneter Detektorelemente erreicht werden' oder andererseits dadurch, dass die einzelnen Detektorelemente, die schließlich entlang der Erstreckungsrichtung R zu Detektorgruppen G1, G2, G3, G4 verschaltet werden, von vornherein eine unterschiedliche Ausdehnung entlang der Querrichtung Q aufweisen.

Figur 6 zeigt schließlich für zwei benachbarte Spuren, die jeweils Detektorgruppen aller vier relevanter Phasen (0°. 90°, 180°, 270°) aufweisen, den Versatzabstand $\Delta x$ der Detektorgruppen einer Phase (0°, 90°, 180°, 270°), jedoch angeordnet in unterschiedlichen Spuren S1 bzw. S2, welcher gegeben ist durch

$$\Delta x = m * d * (1 \pm 1/(2 * n)),$$

mit d = i * $g_f$, wobei n die zu filternde Oberwelle und m eine ganze Zahl bezeichnet sowie $g_f$ die Gitterkonstante der periodischen Anordnung der Detektorelemente ist. Ferner ist d die Gitterkonstante der abzutastenden Messteilung und i eine natürliche Zahl.

Auch bei dieser Variante ist zu berücksichtigen, dass $\Delta x$ im Allgemeinen kein ganzzahliges Vielfaches von $g_f$ ist, so dass auch hier der tatsächliche Versatzabstand $\Delta x$ von Detektorgruppen, der ja nur durch ein ganzzahliges Vielfaches von $g_f$ gebildet werden kann, von dem Idealwert für $\Delta x$ abweicht. Hier ist wiederum eine Minimierung des Gesamtfehlers vorzunehmen, wie weiter oben am Beispiel des Breitenfilters und des Distanzfilters erläutert.

**Patentansprüche**

1. Positionsmesseinrichtung mit

   - einer entlang einer Messrichtung erstreckten Messteilung (M),
   - eine Abtasteinheit zum Abtasten der Messteilung (M) und
   - einer Detektionseinrichtung (D) der Abtasteinheit, die eine Vielzahl entlang einer Erstreckungsrichtung (R) periodisch hintereinander angeordneter Detektorelemente (E) umfasst, die bei Abtastung der Messteilung (M) einer Auswerteeinheit zuführbare Ausgangssignale erzeugen,

   wobei jeweils mehrere benachbarte Detektorelemente (E) derart zu einer Detektorgruppe (G1, G2, G3, G4) zusammengeschaltet sind, dass deren Ausgangssignale zusammengeführt werden und der Auswerteeinheit als einheitliches Signal zugeführt werden können,
   **dadurch gekennzeichnet,**
   **dass** die Detektorelemente (E) derart zu Detektorgruppen (G1, G2, G3, G4) zusammengefasst und die Detektorgruppen (G1, G2, G3, G4) derart entlang der Erstreckungsrichtung (R) hintereinander angeordnet sind, dass mindestens eine definierte Oberwelle aus den Ausgangssignalen eliminiert wird, wozu entweder

   - zur Eliminierung von Oberwellen der Abstand zwischen Detektorgruppen (G1, G2, G3, G4) entlang der Erstreckungsrichtung (R) variiert und der Abstand $\Delta x$ zwischen Detektorgruppen (G1, G2, G3, G4) nach der Vorschrift

$$\Delta x = m * d * (1 \pm 1/(2 * n))$$

mit vorzugsweise $d = i * g_f$ bestimmt wird, wobei d die Gitterkonstante der abzutastenden Messteilung und $g_f$ die Gitterkonstante der periodischen Anordnung der einzelnen Detektorelemente (E) angibt, n die zu filternde Oberwelle und m eine ganze Zahl sowie i eine natürliche Zahl ist
oder
- zur Eliminierung der Oberwellen die Ausdehnung der Detektorgruppen (G1, G2, G3, G4) entlang der Erstreckungsrichtung (R) variiert und die Ausdehnung $\Delta b$ der Detektorgruppen (G1, G2, G3, G4) in Erstreckungsrichtung (R) nach der Vorschrift

$$\Delta b = k * d/N$$

mit vorzugsweise $d = i * g_f$ bestimmt wird, wobei i, k natürliche Zahlen sind sowie d die Gitterkonstante der abzuteilenden Messteilung und $g_f$ die Gitterkonstante der periodischen Anordnung der einzelnen Detektorelemente (E) bezeichnet und n die zu filternde Oberwelle angibt oder
- die Anordnung der Detektorgruppen (G1, G2, G3, G4) entlang der Erstreckungsrichtung (R) gemäß einer Arcussinus-Funktion erfolgt und die Position x der Detektorgruppen (G1, G2, G3, G4) beschrieben wird durch die Funktion

$$x = k * d/(2 * \pi) * \text{arcsin}\,(k/N),$$

mit vorzugsweise $d = i * g_f$, wobei i und N natürliche Zahlen sind und k eine ganze Zahl mit dem Betrag kleiner oder gleich N ist (k = - N ... N) sowie d die Gitterkonstante der abzutastenden Messteilung und $g_f$ die Gitterkonstante der periodischen Anordnung der einzelnen Detektorelemente (E) bezeichnet
oder
- die Ausdehnung der Detektorgruppen (G1, G2, G3, G4) senkrecht zu der Erstreckungsrichtung (R) variiert und die Ausdehnung der Detektorgruppen (G1, G2, G3, G4) senkrecht zu der Erstreckungsrichtung (R) gemäß einer Cosinus- oder einer SinusFunktion variiert
oder
- die Anordnung der Detektorgruppen (G1, G2, G3, G4) entlang der Erstreckungsrichtung (E) durch die Verknüpfung einer ersten erzeugenden Filterfunktion, gemäß derer der Abstand der Detektorgruppen (G1, G2, G3, G4) in Erstreckungsrichtung (R) variiert, mit einer zweiten erzeugenden Filterfunktion, gemäß derer die Ausdehnung der Detektorgruppen (G1, G2, G3, G4) in Erstreckungsrichtung (R) variiert, bestimmt wird.

2. Positionsmesseinrichtung nach Anspruch 1, **dadurch gekennzeichnet, dass** jeweils mehrere in Erstreckungsrichtung (R) voneinander beabstandete Detektorgruppen (G1, G2, G3, G4) derart zusammengeschaltet sind, dass deren Ausgangssignale zusammengeführt und der Auswerteeinheit als einheitliches Signal zugeführt werden.

3. Positionsmesseinrichtung nach Anspruch 2, **dadurch gekennzeichnet, dass** die zusammengeschalteten Detektorgruppen (G1, G2, G3, G4) jeweils Ausgangssignale einer Phase (0°, 90°, 180°, 270°) erzeugen.

4. Positionsmesseinrichtung nach Anspruch 3, **dadurch gekennzeichnet, dass** die Zahl an Detektorelementen (E), aus denen Detektorgruppen (G1, G2, G3, G4) einer Phase (0°, 90°, 180°, 270°) bestehen, entlang der Erstreckungsrichtung (R) der Detektionseinrichtung (D) variiert.

5. Positionsmesseinrichtung nach nach Anspruch 1, **dadurch gekennzeichnet, dass** die Form der einzelnen zu einer Detektorgruppe (G1, G2, G3, G4) verschalteten Detektorelemente (E) derart gewählt ist, dass dadurch eine Filterung zumindest einer weiteren Oberwelle erfolgt, die aus der Abtastung einer Messteilung mit einer anderen Teilungsperiode ($d_f$) resultiert.

6. Positionsmesseinrichtung nach einem der Ansprüche 1 bis 5, **dadurch gekennzeichnet, dass** die Detektorgruppen (G1, G2, G3, G4) entlang mindestens zweier, senkrecht zu der Erstreckungsrichtung (R) nebeneinander liegender Spuren (S1, S2) angeordnet sind.

7. Positionsmesseinrichtung nach Anspruch 1, **dadurch gekennzeichnet, dass** die Anordnung der Detektorgruppen (G1, G2, G3, G4) entlang der Erstreckungsrichtung (R) durch mindestens eine erzeugende Filterfunktion bestimmt wird, die für jedes Detektorelement (E) angibt, mit welchen benachbarten Detektorelementen (E) es zusammengeschaltet ist.

8. Positionsmesseinrichtung nach Anspruch 7, **dadurch gekennzeichnet, dass** die Anordnung der Detektorgruppen (G1, G2, G3, G4) entlang der Erstreckungsrichtung (R) durch die Verknüpfung mindestens zweier erzeugender Filterfunktionen bestimmt wird, die sich auf unterschiedliche Detektorgruppen und/oder auf unterschiedliche Merkmale einer Detektorgruppe beziehen.

9. Positionsmesseinrichtung nach Anspruch 8, **dadurch gekennzeichnet, dass** die Anordnung der Detektorgruppen (G1, G2, G3, G4) entlang der Erstreckungsrichtung (R) durch die Verknüpfung mindestens zweier komplementärer Filterfunktionen bestimmt wird, die sich auf unterschiedliche Detektorgruppen und/oder auf unterschiedliche Merkmale einer Detektorgruppe beziehen.

10. Positionsmesseinrichtung nach Anspruch 6, **dadurch gekennzeichnet, dass** die Detektorgruppen (G1, G2, G3, G4) der einzelnen Phasen (0°, 90°, 180°, 270°) in den verschiedenen Spuren (S1, S2) entlang der Erstreckungsrichtung (R) um einen bestimmten Versatzabstand ($\Delta$x) zueinander versetzt angeordnet sind.

11. Positionsmesseinrichtung nach Anspruch 10, **dadurch gekennzeichnet, dass** der Versatzabstand ($\Delta$x) der Detektorgruppen (G1, G2, G3, G4) einer Phase (0°, 90°, 180°, 270°) sich ergibt als

$$\Delta x = m * d * (1 \pm 1/(2 * n)),$$

mit vorzugsweise $d = i * g_f$, wobei d die Gitterkonstante der abzutastenden Messteilung und $g_f$ die Gitterkonstante der periodischen Anordnung der einzelnen Detektorelemente (E) angibt, n die zu filternde Oberwelle und m eine ganze Zahl sowie i eine natürliche Zahl ist.

12. Positionsmesseinrichtung nach Anspruch 11, **dadurch gekennzeichnet, dass** die Anordnung der Detektorgruppen (G1, G2, G3, G4) in Erstreckungsrichtung (R) durch die Verknüpfung zweier Arcussinus-Funktionen bestimmt ist.

**Claims**

1. A position measuring device comprising

   - a measuring scale (M) extending along a measuring direction,
   - a scanner for scanning the measuring scale (M) and
   - a detection device (D) of the scanner, which comprises a plurality of detector elements (E), which are arranged periodically behind one another along a direction of extension (R) and which generate output signals, which can be fed to an evaluation unit in response to the scanning of the measuring scale (M),

   wherein several adjacent detector elements (E) are in each case interconnected to form a detector group (G1, G2, G3, G4) in such a manner that the output signals thereof are brought together and can be fed to the evaluation unit as a uniform signal,
   **characterized in**
   **that** the detector elements (E) are combined to form detector groups (G1, G2, G3, G4) and in that the detector groups (G1, G2, G3, G4) are arranged behind one another along a direction of extension (R) in such a manner that at least one defined harmonic wave is eliminated from the output signals, for the purpose of which either

   - the distance between detector groups (G1, G2, G3, G4) along the direction of extension (R) varies for the purpose of eliminating harmonic waves and the distance Δx between detector groups (G1, G2, G3, G4) is determined according to the rule

$$\Delta x \;=\; m\text{*}d\text{*}(1\underline{+}1/(2\text{*}n))$$

with preferably $d = i\text{*}g_f$, wherein d designates the grid constant of the measuring scale, which is to be scanned, and $g_f$ designates the grid constant of the periodic configuration of the individual detector elements (E), n being the harmonic wave, which is to be filtered, and m being an integral number and i being a natural number or

- the expansion of the detector groups (G1, G2, G3, G4) varies along the direction of extension (R) for the purpose of eliminating the harmonic waves and the expansion Δb of the detector groups (G1, G2, G3, G4) in the direction of expansion (R) is determined according to the rule

$$\Delta b \;=\; k\text{*}d/N$$

with preferably $d = i\text{*}g_f$, wherein i, k are natural numbers and wherein d designates the grid constant of the measuring scale, which is to be separated and $g_f$ designates the grid constant of the period configuration of the individual detector elements (E) and n specifies the harmonic wave, which is to be filtered or

- the configuration of the detector groups (G1, G2, G3, G4) along the direction of extension (R) is carried out according to an arcsin function and the position x of the detector groups (G1, G2, G3, G4) is described by means of the function

$$x \;=\; k\text{*}d/(2\text{*}\pi)\text{*}\arcsin(k/N),$$

with preferably $d = i\text{*}g_f$, wherein i and N are natural numbers and k is an integral number with the sum being less or equal to N (k = -N ... N) and d designates the grid constant of the measuring scale, which is to be scanned, and $g_f$ designates the grid constant of the periodic configuration of the individual detector elements (E) or

- the expansion of the detector groups (G1, G2, G3, G4) varies perpendicularly to the direction of extension (R) and the expansion of the detector groups (G1, G2, G3, G4) varies perpendicularly to the direction of extension (R) according to a cosine or a sine function or

- the configuration of the detector groups (G1, G2, G3, G4) along the direction of extension (E) is determined by means of the connection of a first generating filter function, according to which the distance of the detector groups (G1, G2, G3, G4) varies in the direction of extension (R), to a second generating filter function, according to which the expansion of the detector groups (G1, G2, G3, G4) varies in the direction of extension (R).

2. The position measuring device according to claim 1, **characterized in that** several detector groups (G1, G2, G3, G4), which are spaced apart from one another in the direction of extension (R), are in each case interconnected in such a manner that the output signals thereof are brought together and are fed to the evaluation unit as a uniform signal.

3. The position measuring device according to claim 2, **characterized in that** the interconnected detector groups (G1, G2, G3, G4) in each case generate output signals of a phase (0°, 90°, 180°, 270°).

4. The position measuring device according to claim 3, **characterized in that** the number of detector elements (E) of which detector groups (G1, G2, G3, G4) of a phase (0°, 90°, 180°, 270°) consist, vary along the direction of extension (R) of the detection device (D).

5. The position measuring device according to claim 1, **characterized in that** the form of the individual detector elements (E), which are interconnected to form a detector group (G1, G2, G3, G4), is chosen in such a manner that a filtering of at least one further harmonic wave, which results from the scanning of a measuring scale with another grating period ($d_f$), is thus carried out.

6. The position measuring device according to one of claims 1 to 5, **characterized in that** the detector groups (G1, G2, G3, G4) are arranged along at least two tracks (S1, S2), which are located next to one another perpendicular to the direction of extension (R).

7. The position measuring device according to claim 1, **characterized in that** the configuration of the detector groups (G1, G2, G3, G4) along the direction of extension (R) is determined by means of at least one generating filter function, which specifies for each detector element (E) with which adjacent detector elements (E) it is interconnected.

8. The position measuring device according to claim 7, **characterized in that** the configuration of the detector groups (G1, G2, G3, G4) along the direction of extension (R) is determined by means of the connection of at least two generating filter functions, which refer to different detector groups and/or to different features of a detector group.

9. The position measuring device according to claim 8, **characterized in that** the configuration of the detector groups (G1, G2, G3, G4) along the direction of extension (R) is determined by means of the connection of at least two complementary filter functions, which refer to different detector groups and/or to different features of a detector group.

10. The position measuring device according to claim 6, **characterized in that** the detector groups (G1, G2, G3, G4) of the individual phases (0°, 90°, 180°, 270°) in the different tracks (S1, S2) along the direction of extension (R) are arranged so as to be offset relative to one another about a certain offset distance (Δx).

11. The position measuring device according to claim 10, **characterized in that** the offset distance (Δx) of the detector groups (G1, G2, G3, G4) of a phase (0°, 90°, 180°, 270°) results as

$$\Delta x = m*d*(1\underline{+}1/(2*n)),$$

with preferably $d = i*g_f$, wherein d specifies the grid constant of the measuring scale, which is to be scanned, and $g_f$ specifies the grid constant of the periodic configuration of the individual detector elements (E), n being the harmonic wave, which is to be filtered, and m being an integral number and i being a natural number.

12. The position measuring device according to claim 11, **characterized in that** the configuration of the detector groups (G1, G2, G3, G4) in the direction of extension (R) is determined by means of the connection of two arcsin functions.

**Revendications**

1. Dispositif de mesure de position, avec

   - une graduation de mesure (M) étendue le long d'une direction de mesure,
   - une unité de balayage pour le balayage de la graduation de mesure (M) et
   - un dispositif de détection (D) de l'unité de balayage, comprenant une multitude d'éléments de détecteur (E) disposés périodiquement les uns derrière les autres le long d'une direction d'extension (R), produisant des signaux de sortie susceptibles d'être envoyés à une unité d'évaluation lors du balayage de la graduation de mesure (M),

   dans lequel les éléments de détecteur (E) voisins sont connectés de telle manière entre eux en formant un groupe de détecteurs (G1, G2, G3, G4), que leurs signaux de sortie sont réunis et peuvent être envoyés à l'unité d'évaluation en tant que signal unique,
   **caractérisé en ce que**

les éléments de détecteur (E) sont rassemblés de telle manière en groupes de détecteurs (G1, G2, G3, G4) et les groupes de détecteurs (G1, G2, G3, G4) sont disposés de telle manière les uns derrière les autres le long de la direction d'extension (R), qu'au moins une onde harmonique est éliminée des signaux de sortie, ce pour quoi, soit

- pour l'élimination des ondes harmoniques, l'espacement entre les groupes de détecteurs (G1, G2, G3, G4) varie le long de la direction d'extension (R), et l'espacement $\Delta x$ entre les groupes de détecteurs (G1, G2, G3, G4) est déterminé selon la formule

$$\Delta x = m * d * (1 \pm 1/(2 * n))$$

avec de préférence $d = i * g_f$, d indiquant la constante de grille de la graduation de mesure à balayer et $g_f$ indiquant la constante de grille de la disposition périodique des différents éléments de détecteur (E), n étant l'onde harmonique à filtrer, m un nombre entier et i un nombre naturel,
soit
- pour l'élimination des ondes harmoniques, l'extension des groupes de détecteurs (G1, G2, G3, G4) varie le long de la direction d'extension (R), et l'extension $\Delta b$ des groupes de détecteurs (G1, G2, G3, G4) le long de la direction d'extension (R) est déterminée par la formule

$$\Delta b = k * d/N$$

avec de préférence $d = i * g_f$, où i et k sont des nombres naturels, d désignant la constante de grille de la graduation de mesure (M) à balayer et $g_f$ la constant de grille de la disposition périodique des différents éléments de détecteur (E), et n indiquant l'onde harmonique à filtrer,
soit
- la disposition des groupes de détecteurs (G1, G2, G3, G4) le long de la direction d'extension (R) est définie selon une fonction arc sinus, et la position x des groupes de détecteurs (G1, G2, G3, G4) est décrite par la fonction

$$x = k * d/(2 * \square) * arcsin (k/N),$$

avec de préférence $d = i * g_f$, où i et N sont des nombres naturels et k est un nombre entier inférieur ou égal à N ($k = -N ... N$), et d désigne la constante de grille de la graduation de mesure (M) à balayer, et $g_f$ la constante de grille de la disposition périodique des différents éléments de détecteur (E),
soit
- l'extension des groupes de détecteurs (G1, G2, G3, G4) varie perpendiculairement à la direction d'extension (R), et l'extension des groupes de détecteurs (G1, G2, G3, G4) varie perpendiculairement à la direction d'extension (R) selon une fonction cosinus ou une fonction sinus,
soit
- la disposition des groupes de détecteurs (G1, G2, G3, G4) le long de la direction d'extension (R) est déterminée par une combinaison d'une première fonction de filtre, selon laquelle l'espacement des groupes de détecteurs (G1, G2, G3, G4) varie dans la direction d'extension (R), avec une deuxième fonction de filtre, selon laquelle l'extension des groupes de détecteurs (G1, G2, G3, G4) varie dans la direction d'extension (R).

2. Dispositif de mesure de position selon la revendication 1, **caractérisé en ce que** plusieurs groupes de détecteurs (G1, G2, G3, G4) espacés les uns des autres dans la direction d'extension (R) sont à chaque fois connectés de telle façon les uns aux autres, que leurs signaux de sortie sont réunis et envoyés à l'unité d'évaluation en tant que signal unique.

3. Dispositif de mesure de position selon la revendication 2, **caractérisé en ce que** les groupes de détecteurs (G1, G2, G3, G4) connectés entre eux produisent chacun des signaux de sortie d'une phase (0°, 90°, 180°, 270°).

**4.** Dispositif de mesure de position selon la revendication 3, **caractérisé en ce que** le nombre d'éléments de détecteur (E) formant des groupes de détecteurs (G1, G2, G3, G4) d'une phase (0°, 90°, 180°, 270°) varie le long de la direction d'extension (R) du dispositif de détection (D).

**5.** Dispositif de mesure de position selon la revendication 1, **caractérisé en ce que** la forme des différents éléments de détecteur (E) connectés en un groupe de détecteurs (G1, G2, G3, G4) est choisie de manière à produire un filtrage d'au moins une autre onde harmonique, résultant du balayage d'une graduation de mesure (M) avec une autre période de division ($d_f$).

**6.** Dispositif de mesure de position selon l'une des revendications 1 à 5, **caractérisé en ce que** les groupes de détecteurs (G1, G2, G3, G4) sont disposés le long d'au moins deux pistes (S1, S2) disposées côte à côte, perpendiculairement à la direction d'extension (R).

**7.** Dispositif de mesure de position selon la revendication 1, **caractérisé en ce que** la disposition des groupes de détecteurs (G1, G2, G3, G4) le long de la direction d'extension (R) est déterminée par au moins une fonction de filtre définissant, pour chaque élément de détecteur (E), avec quel élément de détecteur (E) voisin il est connecté.

**8.** Dispositif de mesure de position selon la revendication 7, **caractérisé en ce que** la disposition de groupes de détecteurs (G1, G2, G3, G4) le long de la direction d'extension (R) est déterminée par la combinaison d'au moins deux fonctions de filtre, qui se rapportent à différents groupes de détecteurs et/ou à différentes caractéristiques d'un groupe de détecteurs.

**9.** Dispositif de mesure de position selon la revendication 8, **caractérisé en ce que** le disposition des groupes de détecteurs (G1, G2, G3, G4) le long de la direction d'extension (R) est déterminée par la combinaison d'au moins deux fonctions de filtre complémentaires, qui se rapportent à différents groupes de détecteurs et/ou à différentes caractéristiques d'un groupe de détecteurs.

**10.** Dispositif de mesure de position selon la revendication 6, **caractérisé en ce que** les groupes de détecteurs (G1, G2, G3, G4) des différentes phases (0°, 90°, 180°, 270°) dans les différentes pistes (S1, S2) sont disposés en décalage d'un certain espacement de décalage ($\Delta x$) les uns par rapport aux autres le long de la direction d'extension (R).

**11.** Dispositif de mesure de position selon la revendication 10, **caractérisé en ce que** l'espacement de décalage ($\Delta x$) des groupes de détecteurs (G1, G2, G3, G4) d'une phase (0°, 90°, 180°, 270°) résulte de

$$\Delta x = m * d * (1 \pm 1/(2 * n)),$$

avec de préférence $d = i * g_f$, où d indique la constante de grille de la graduation de mesure (M) à balayer, et $g_f$ la constante de grille de la disposition périodique des différents éléments de détecteur (E), n étant l'onde harmonique à filtrer, m un nombre entier et i un nombre naturel.

**12.** Dispositif de mesure de position selon la revendication 11, **caractérisé en ce que** la disposition des groupes de détecteurs (G1, G2, G3, G4) dans la direction d'extension (R) est déterminée par la combinaison de deux fonctions arc sinus.

EP 1 515 123 B1

# FIG 1

## FIG 2

| G1 | G3 | G1 | G3 | | G2 | G4 | G2 | G4 | | G3 | G1 | G3 | G1 | | G4 | G2 | G4 | G2 |

19gf    5gf    18gf    6gf    18gf    6gf    19gf    5gf

11gf    10gf    10gf    11gf

L    L    L    D    E    R

## FIG 3

| G1 | G3 | G1 | G3 | | G2 | G4 | G2 | G4 | | G3 | G1 | G3 | G1 |

S1    D    E    R    E    S2

| G4 | G2 | G4 | G2 | G4 | | G1 | G3 | G1 | G3 | G1 | | G2 | G4 | G2 | G4 | G2 |

L    L

EP 1 515 123 B1

# FIG 4

EP 1 515 123 B1

FIG 5A

# FIG 5B

0°=G1

180°=G3

# FIG 6

0°    90°    180°    270°

S1

S2

Δx    0°    90°    180°    270°

# FIG 7

EP 1 515 123 B1

**IN DER BESCHREIBUNG AUFGEFÜHRTE DOKUMENTE**

**In der Beschreibung aufgeführte Patentdokumente**

- EP 1308700 A2
- DE 19505176 A1
- DE 19508700 C1
- DE 4411808 A1
- DE 10020575 A1